(19) **Europäisches Patentamt**
**European Patent Office**
**Office européen des brevets**

(11) Publication number: **0 233 736 B1**

## (12) EUROPEAN PATENT SPECIFICATION

(45) Date of publication of patent specification: **10.07.91**

(51) Int. Cl.⁵: **H04N 5/225**, H04N 5/76

(21) Application number: **87301066.4**

(22) Date of filing: **06.02.87**

(54) **Composite camera apparatus.**

(30) Priority: **06.02.86 JP 24690/86**

(43) Date of publication of application:
**26.08.87 Bulletin 87/35**

(45) Publication of the grant of the patent:
**10.07.91 Bulletin 91/28**

(84) Designated Contracting States:
**DE ES FR GB NL**

(56) References cited:
**US-A- 3 114 002**
**US-A- 3 546 378**
**US-A- 4 232 329**

**"DAS ELEKTRON", no. 9, 1981, Linz**
**"MAG-Kamera" page222**

(73) Proprietor: **SONY CORPORATION**
**7-35 Kitashinagawa 6-Chome Shinagawa-ku**
**Tokyo 141(JP)**

(72) Inventor: **Niimura, Tsutomu**
**Sony Corporation 7-35, Kitashinagawa**
**6-chome**
**Shinagawa-ku Tokyo(JP)**

(74) Representative: **Ayers, Martyn Lewis Stanley**
**et al**
**J.A. KEMP & CO. 14 South Square Gray's Inn**
**London, WC1R 5EU(GB)**

## Description

The present invention relates to composite camera apparatus which functions both as a film camera and a video camera, and more particularly, to an apparatus containing a portion working as a video camera for producing a video signal representing a moving subject combined with a portion working as a film camera for taking a photograph of still images of a subject.

In a video camera operative to pick up images of a moving subject and to produce video signals, generally, light passing through an object lens from the moving subject impinges on a light receiving surface of an image pickup device such as an image pickup tube or a solid state image pickup element and a video signal is produced based on a pickup output signal which is obtained from the image pickup device in response to images formed on the light receiving surface. Then, the video signal thus obtained is, for example, recorded on a record medium such as a magnetic tape, and after that, reproduced from the record medium for displaying moving pictures on a display device.

In comparison with such a video camera containing the image pickup device for producing the video signal based on images of moving subjects, a film camera in which light from a subject is received by a photosensitive film and still images of the subject are formed on the photosensitive film has in general an advantage in providing still pictures of superior quality on the photosensitive film. Therefore, in various cases, the video camera and the film camera are used selectively at the respective opportunities. However, there is an inconvenience to a person who uses both video and film cameras that he has to bring two independent camera apparatus with him.

US-A-3546378 discloses a combined still and video camera wherein a movable mirror is positionable at a first position to direct incident light upon an image pickup means and at a second position to direct incident light upon a photosensitive film.

However, in a composite camera apparatus employing the movable mirror for guiding the light from the subject selectively to the light receiving surface of the image pickup device in the video camera arrangement or the photosensitive film in the film camera mechanism, there is another disadvantage that, in the case where the movable mirror is moved to guide the light from the subject to the photosensitive film and the photographing operation of the film camera mechanism is performed when the video camera arrangement is in operation for producing a video signal representing the subject, the pickup output signal is not obtained from the image pickup device in the video camera arrangement and therefore, although the mirror action may be fast, the video signal to be generated in the video camera arrangement is interrupted during the photographing operation of the film camera mechanism. Such an interruption deteriorates the video signal obtained from the video camera arrangement in quality. In this connection, it is possible to compensate a little for the deterioration in quality of the video signal obtained from the video camera arrangement by adding a video signal having a predetermined level, for example, a video signal of a gray level to an interrupted portion of the video signal, but the compensation made in such a manner is insufficient.

It is an aim of this invention to improve the situation.

According to the present invention there is provided a composite camera apparatus having lens means upon which light from a subject is incident,

a film holder for supporting a photosensitive film upon which an image of the subject is formed by the light having passed through said lens means;

an image pickup means provided with a light receiving surface upon which an image of the subject is formed by the light having passed through said lens means for producing a pickup output signal in response to the image formed upon the light receiving surface;

a movable mirror selectively positionable at a first position for permitting the light having passed through said lens means to be incident upon said light receiving surface of the image pickup means and at a second position for permitting the light having passed through said lens means to be incident upon said photosensitive film; and

mirror control means selectively operable by the user of the camera to cause said movable mirror to be positioned at said second position in synchronism with the occurrence of the next vertical blanking period in video signal after the user causes the mirror control means (13) to be operable, characterised by video signal generating means connected to said image pickup means for continuously producing said video' signal based upon the pickup output signal obtained from said image pickup means and by memory means operative to electronically store each successive predetermined segment of the pickup output signal obtained from said image pickup device (16) in such a manner that each successive stored segment replaces the previously stored segment when said movable mirror is positioned at said first position and to permit the last stored segment to be read therefrom when said movable mirror is positioned at said second position.

In the composite camera apparatus thus constituted in accordance with the present invention, the movable mirror is usually disposed at the first position and further disposed at the second position in particular when the predetermined operation is carried out for the purpose of having the movable mirror disposed at the second position. In the case where the movable mirror is disposed at the first position, the light from the subject having passed through the lens device is guided to the light receiving surface of the image pickup device and the pickup output signal is obtained from the image pickup device to be supplied to the video signal generating circuit. Then, the predetermined segments of the pickup output signal obtained from the image pickup signal or the video signal generated based on the pickup output signal in the video signal generating circuit are stored in the memory successively in such a manner that each segment is renewed with successive one. Further, the video signal generated based on the pickup output signal is derived from the video signal generating circuit.

When the predetermined operation is carried out for the purpose of having the movable mirror disposed at the second position under the condition wherein the movable mirror disposed at the first postion, the mirror controller causes the movable mirror to be disposed at the second position in synchronism with the period corresponding to the vertical blanking period in the video signal obtained from the image pickup device and appearing after the predetermined operation is carried out for the purpose of having the movable mirror disposed at the second position, and then keeps the movable mirror being disposed at the second position for the predetermined period.

In the case where the movable mirror is disposed at the second position, the light from the subject having passed through the lens device is guided to the photosensitive film so that a still image of the subject is formed on the same. On such an occasion, although the pickup output signal is not obtained from the image pickup device, the pickup output signal or the video signal stored in the memory is read from the memory and supplied to the video signal generating circuit instead of the pickup output signal from the image pickup device, so that the video signal generated based on the pickup output signal read from the memory or the video signal read from the memory is derived from the video signal generating circuit. Consequently, the video signal is continuously obtained from the video signal generating circuit even in the period wherein the movable mirror is kept to be disposed at the second position and thereby the still image of the subject is formed on the photosensitive film.

In such a manner as described above, the light from the subject which passed through the lens device is incident selectively upon the light receiving surface of the image pickup device and the photosensitive film without being substantially attenuated and the still image of the subject is formed properly on the photosensitive film under the situation wherein the video signal is continuously obtained from the video signal generating circuit without being deteriorated in quality by interruptions. Further, since the shift of the movable mirror from the first position to the second position is carried out in the period corresponding to the vertical blanking period in the video signal obtained from the video signal generating circuit, the video signal derived from the video signal generating circuit is prevented from having undesirable variations resulting from the positional shift of the movable mirror.

The above, and other objects, features and advantages of the present invention will become apparent from the following detailed description which is to be read in conjunction with the accompanying drawings. In the drawings:-

Fig. 1 is a block diagram showing one embodiment of composite camera apparatus according to the present invention;

Figs. 2A to 2E are waveform diagrams used for explaining the operation of the embodiment shown in Fig. 1; and

Fig. 3 is a block diagram showing another embodiment of composite camera apparatus according to the present invention.

The invention will now be described by way of example with reference to the acconpanying drawings.

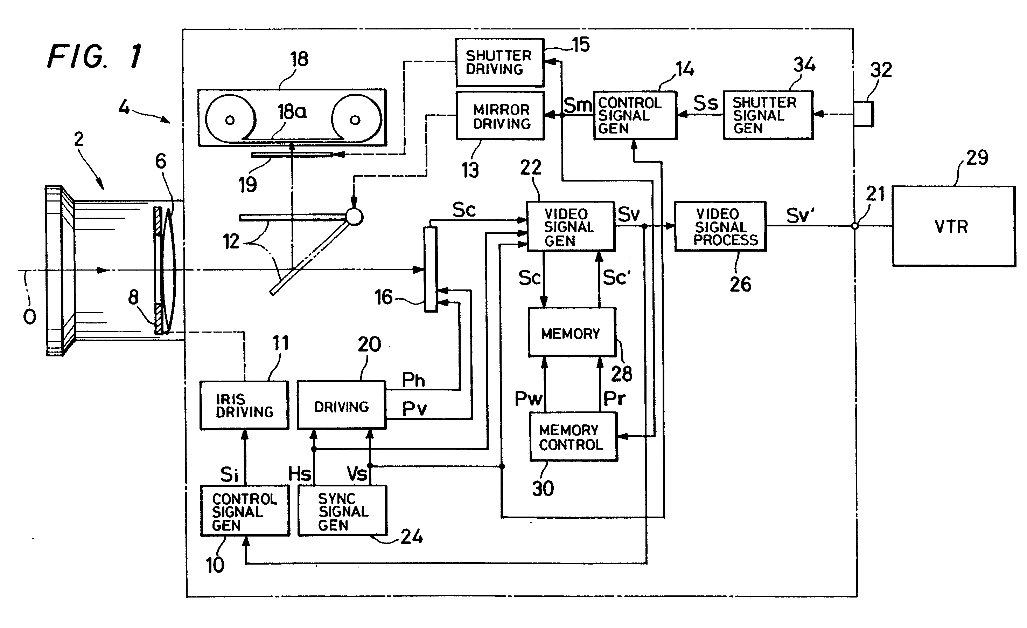

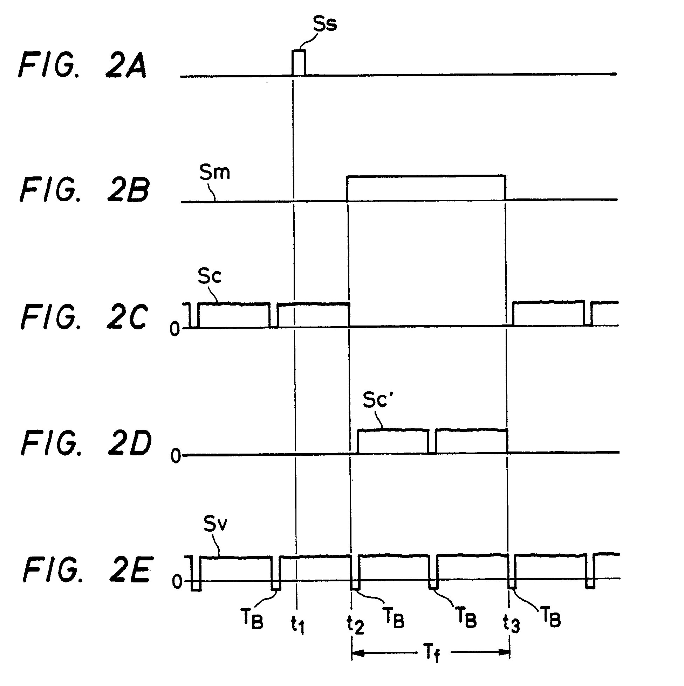

Referring to Fig. 1 showing one embodiment of composite camera apparatus according to the present invention, a lens portion 2 and a body portion 4 to which the lens portion 2 is removably attached are provided. In the lens portion 2, a lens device 6 is provided and an iris diaphragm 8 is disposed in front of the lens device 6 for limiting the amount of light incident upon the lens device 6 from a subject (the light from the subject is indicated with a dot-dash line 0 in Fig. 1). The iris diaphragm 8 is controlled to vary limitation to the light coming from the subject by a iris driving block 11 which is contained in the body portion 4 and operates in response to an iris control signal Si supplied thereto from a control signal generating block 10 also contained in the body portion 4 so as to limit the light coming from the subject determined appropriately in response to brightness of the subject.

In the body portion 4, a movable mirror 12 is provided to be disposed selectively at a first position indicated with a solid line in Fig. 1 and a second position indicated with a double dots-dash line in Fig. 1 so as to change as occasion demands the path of the light coming from the subject and having passed through the lens device 6. For example, the movable mirror 12 is placed at the first position when a mirror control signal Sm which is supplied to a mirror driving block 13 from a control signal generating block 14 has a predetermined low level and at the second position when the mirror control signal Sm has a predetermined high level. This means that a mirror control portion is formed by the mirror driving block 13 and the control signal generating block 14 in this embodiment.

An image pickup device 16 which is constituted with, for example, a charge coupled device (CCD) image pickup element of the 2/3 inches type is provided at a position where the light 0 from the subject having passed through the lens device 6 arrives at under the situation in which the movable mirror 12 is disposed at the first position indicated with the solid line in Fig. 1 so that the light 0 is incident upon a light receiving surface of the image pickup device 16. Further, a film holder 18 on which a photosensitive film 18a is loaded is provided at a position where the light 0 from the subject having passed through the lens device 6 arrives at when the movable mirror 12 is disposed at the second position indicated with the double dots-dash line in Fig. 1. It is desired to use a film having a frame size corresponding to the size of the light receiving surface of the image pickup device 16, such as, for example, a film having a frame width of sixteen millimeters, as the photosensitive film 18a. In the case where an optical system for adjusting the frame size on the film is provided, it is possible to use a film having a frame size greater than the size of the light receiving surface of the image pickup device 16, such as a film having a frame width of thirty-two millimeters, as the photosensitive film 18a. In case of use of film having a frame size corresponding to the size of the light receiving surface of the image pickup device 16, any optical system operative to cause each exposed area on the photosensitive film 18a to be coincident in size with an exposed area on the light receiving surface of the image pickup device 16 is not required to be provided.

A shutter 19 which is operative to limit the duration of the period in which the light 0 is incident upon the photosensitive film 18a through the movable mirror 12 disposed at the second position indicated with the double dots-dash line in Fig. 1 is provided in front of the film holder 18. This shutter 19 is controlled by a shutter driving block 15 to which the mirror control signal Sm is supplied from the control signal generating block 14 so as to closed usually and opened to permit the light 0 to be incident upon the photosensitive film 18a for a selected period after the mirror control signal Sm is given the predetermined high level.

A vertical transferring pulse signal Pv and a horizontal transferring pulse signal Ph are supplied to the image pickup device 16 from a driving block 20, and electronic charge produced in response to the light 0 incident upon the light receiving surface is transferred in accordance with the vertical and horizontal transferring pulse signals Pv and Ph in the image pickup device 16, so that a pickup output signal Sc generated in response to images of the subject formed on the light receiving surface is obtained from the image pickup device 16. The vertical and horizontal transferring pulse signals Pv and Ph are controlled in timing respectively by vertical and horizontal synchronous signals Vs and Hs supplied to the driving block 20 from a synchronous signal generating block 24.

A video signal generating block 22 is connected with the output end of the image pickup device 16 to be supplied with the pickup output signal Sc, and a memory 28 is connected to the video signal generating block 22. In the video signal generating block 22, a sample and holding circuit, automatic gain control circuit, preemphasis circuit, clamping circuit and so on are included. The vertical and horizontal synchronous signals Vs and Hs are supplied also to the video signal generating block 22, and a video signal Sv is produced based on the pickup output signal Sc from the image pickup device 16 and the vertical and horizontal synchronous signals Vs and Hs from the synchronous signal generating block 24 in the video signal generating block 22.

In the situation in which the movable mirror 12 is placed at the first position and the pickup output signal Sc is obtained from the image pickup device, each predetermined segment of the pickup output signal Sc corresponding to, for example, successive two field periods is written successively in the memory 28 so as to be stored therein in such a manner that each predetermined segment is renewed by a succeeding one, in accordance with a writing pulse signal Pw supplied to the memory 28 from a memory control block 30. To the contrary, when the movable mirror 12 is placed at the second position and the pickup output signal Sc is not obtained from the image pickup device 16, the pickup output signal stored in the memory 28 is read from the memory 28 in accordance with a reading pulse signal Pr supplied to the memory from the memory control block 30 and supplied to the video signal generating block 22 as a supplemental pickup output signal Sc'. The timing for the supply of the supplemental pickup output signal Sc' to the video signal generating block 22 from the memory 28, that is, the timing for the supply of the reading pulse signal Pr to the memory 28 from the memory control block, substituting for the supply of the writing pulse signal Pw, is controlled in accordance with mirror control signal Sm supplied to the memory control block 30 from the control signal generating block 14, so that the pickup output signal Sc stored in the memory 28 is read from the memory 28, for example, the mirror control signal Sm is given the predetermined high level.

In the period in which the supplemental pickup output signal Sc' is supplied to the video signal generating block 22 from the memory 28, the video signal generating block 22 produces the video signal Sv based on the supplemental pickup output signal Sc' and the vertical and horizontal synchronous signals Vs and Hs. The video signal Sv which is generated based on the pickup output signal Sc obtained from the image pickup device 16 or the supplemental pickup output signal Sc' read from the memory 28 is supplied to a video signal processing block 26. In the video signal processing block 26, for example, a luminance signal is separated from the video signal Sv and used for frequency-modulating a predetermined carrier so as to produce a frequency modulated luminance signal, and a chrominance signal is also separated from the video signal Sv and frequencyconverted to be a frequency converted chrominance signal. The frequency modulated luminance signal and frequency converted chrominance signal are mixed with each other to produce a processed composite video signal Sv' and delivered to an output terminal 21. Then, the processed composite video signal Sv' obtained from the output terminal 21 is supplied, for example, to a video tape recorder 29 to be recorded on a magnetic tape therein. The video signal Sv obtained from the video signal generating block 22 is supplied also to the control signal generating block 10, and the control signal generating block 10 produces the iris control signal Si having a level varying in response to the peak level of the video signal Sv and supplies the same to the iris driving block 11.

Further, a shutter button 32 is provided on the body portion 4 for causing the shutter 19 disposed between the movable mirror 12 and the photosensitive film 18a to operate. When the shutter button 32 is operated, a shutter signal Ss is supplied to the control signal generating block 14 from a shutter signal generating block 34 to which the shutter button 32 is coupled. The control signal generating block 14 is further supplied with the vertical synchronous signal Vs from the synchronous signal generating block 24. When the shutter signal Ss is supplied to the control signal generating block 14 from the shutter signal generating block 34 in response to the operation of the shutter button 32, the control signal generating block 14 delivers the mirror control signal Sm having the predetermined high level to the mirror driving block 13, shutter driving block 15 and memory control block 30 in synchronism with a vertical synchronous signal Vs supplied thereto first after the shutter button 32 is operated.

With the configuration thus constituted, assuming that the shutter button 32 is operated at a time point $t_1$ and the shutter signal Ss is sent out from the shutter signal generating block 34 at the time point $t_1$, as shown in Fig. 2A, prior to $t_1$, the mirror control signal Sm has the predetermined low level as shown in Fig. 2B and therefore the movable mirror 12 is kept to be disposed at the first position indicated with the solid line in Fig. 1 before the time point $t_1$. In such a condition taken before the time point $t_1$, the light 0 from the subject having passed through the lens device 6 is incident upon the light receiving surface of the image pickup device 16 and the pickup output signal Sc containing successive field period components, as shown in Fig. 2C, is obtained from the image pickup device 16 and supplied to the video signal generating block 22. The video signal generating block 22 delivers the pickup output signal Sc to the memory 28, so that each segment of the pickup output signal Sc corresponding to two successive field periods is-written successively in the memory 28 so as to be stored therein in such a manner that each predetermined segment is renewed by a succeeding one, in accordance with the writing pulse signal Pw supplied from the memory control block 30, and simultaneously produces the video signal Sv, as shown in Fig. 2E, based on the pickup output signal Sc and the vertical and horizontal synchronous signals Vs and Hs from the synchronous signal generating block 24 to be supplied to both the control signal generating block 10 and the video signal processing block 26.

The control signal generating block 10 supplies the iris control signal Si having a level varying in response to the peak level of the video signal Sv to the iris driving block 11 and the iris diaphragm 8 is controlled by the iris driving block 11. The video signal processing block 26 produces the processed composite video signal Sv' based on the video signal Sv supplied from the video signal generating block 22 and delivers the same to the output terminal 21.

Then, when the shutter button 32 is operated at the time point $t_1$, the shutter signal Ss as shown in Fig. 2A is obtained from the shutter signal generating block 34 and supplied to the control signal generating block 14. The control signal generating block 14 supplied with the shutter signal Ss generates the mirror control signal Sm which rises to the predetermined high level at a time point $t_2$ coinciding with the rising edge of a vertical synchronous signal Vs supplied from the synchronous signal generating block 24 first after the time point $t_1$, that is, coinciding with a time point at which a vertical blanking period $T_B$ in the video signal Sv as shown in Fig. 2E start, so as to keep the predetermined high level for a period of two fields thereafter, and then falls to the predetermined low level at a time point $t_3$ delayed by the period of two fields from the time point $t_2$, as shown in Fig. 2B.

With such a mirror control signal Sm as shown in Fig. 2B, the mirror driving block 13 causes the movable mirror 12 to move into the second position indicated with the double dots-dash line in Fig. 1 at the time point $t_2$, to remain there for the period of two fields thereafter and to return to the first position at the time point $t_3$, and simultaneously the shutter driving block 15 causes the shutter 19 to be opened for a predetermined period within a period Tf from the time point $t_2$ to the time point $t_3$. Accordingly, in the period Tf, the light 0 from the subject having passed through the lens device 6 is reflected by the movable mirror 12 toward the photosensitive film 18a without arriving at the light receiving surface of the image pickup device 16, and during the predetermined period within the period Tf in which the shutter 19 is opened, the light 0 from the subject having passed through the lens device 6 is incident upon the photosensitive film 18a so that an image of the subject is formed on the photosensitive film 18a, that is, a photographic still image of the subject is obtained on the photosensitive film 18a. Where the film is required to be exposed for more than two fields, the circuitry may be arranged to hold the mirror 12 in the chain-dotted position for an integral number of frames.

In the period Tf, although the pickup output signal Sc is not obtained as shown in Fig. 2C, the mirror control signal Sm having the predetermined high level as shown in Fig. 2B is supplied to the memory control block 30 so that the reading pulse signal Pr is supplied to the memory 28 from the memory control block 30 and therefore the segment of the pickup output signal Sc corresponding to successive two field periods, which has been stored in the memory 28 just before the period Tf, is read from the memory 28 to be used as the supplemental pickup output signal Sc' as shown in Fig. 2D and supplied to the video signal generating block 22. Consequently, the video signal Sv is generated based on the supplemental pickup output signal Sc' in the video signal generating block 22 even in the period Tf, as shown in Fig. 2E, so that the video signal Sv obtained from the video signal generating block 22 is not interrupted.

After the time point $t_3$ at which the mirror control signal Sm falls to the predetermined low level, the movable mirror 12 is disposed again at the first position. Accordingly, the pickup output signal Sc is obtained from the image pickup device 16 to be supplied to the video signal generating block 22 and each predetermined segment of the pickup output signal Sc corresponding to successive two field periods is stored in the memory 28 in the manner that each segment is renewed by a succeeding one in the next video frame.

As described above, the video signal Sv is continuously obtained from the video signal generating block 22 without being deteriorated in quality by interruptions even in the period Tf wherein the still image of the subject is formed on the photosensitive film 18a. In this case, since the shift of the movable mirror 12 from the first position to the second position or vice versa is carried out in the period corresponding to the vertical blanking period $T_B$ in the video signal Sv obtained from the video signal generating block 22, the video signal Sv derived from the video signal generating block 22 is prevented from having undesirable variations resulting from the positional shift of the movable mirror 12. Further, since a light splitter of the mirror type is not provided in a path for the light 0 from the subject, the light 0 incident upon the light receiving surface of the image pickup device 16 or the photosensitive film 18a after having passed through the lens device 6 is not subjected to attenuation. Therefore, the minimum illuminance of the subject required for obtaining the video signal Sv representing properly the subject and proper photographic still images of the subject on the photosensitive film 18a is not increased, and as a result, a subject in a relatively dark scence can be properly picked up in its image by the image pickup device 16 and properly photographed on the photosensitive film 18a.

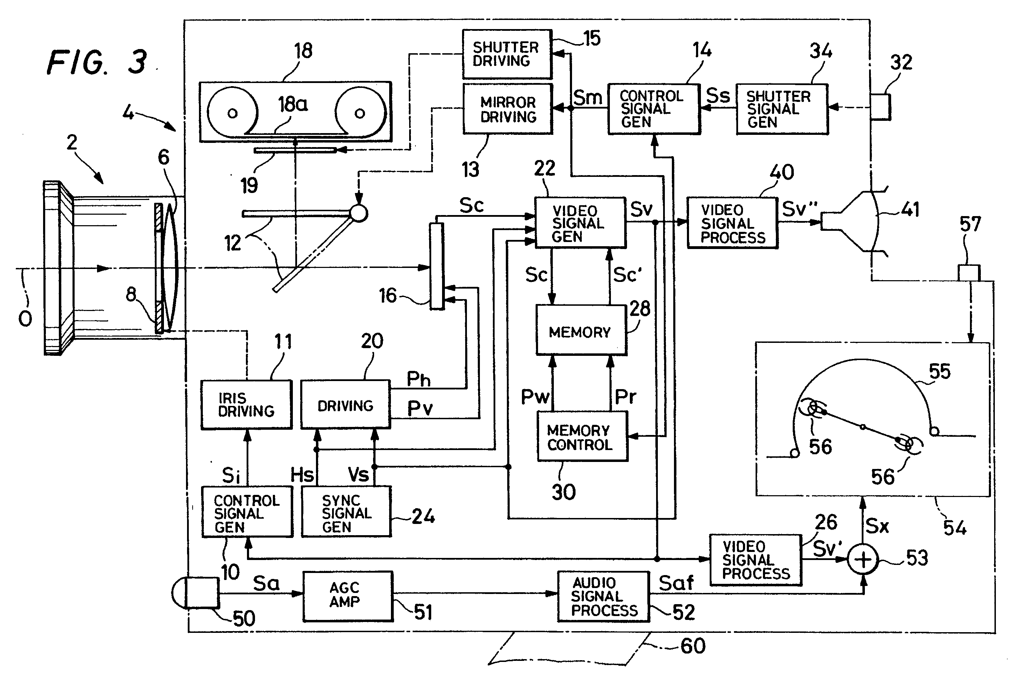

Fig. 3 shows another embodiment of composite camera apparatus according to the present invention. In Fig. 3, elements, blocks and parts corresponding to those of Fig. 1 are marked with the same references and further description thereof will be omitted.

In the embodiment shown in Fig. 3, a video signal Sv obtained from a video signal generating block 22 is supplied, in addition to a video signal processing block 26, to another video signal processing block 40. The video signal processing block 40 produces a composite video signal Sv" which is appropriate for display on a cathode ray tube based on the video signal Sv from the video signal generating block 22 and supplies the same to a cathode ray tube 41, so that a moving image of the subject is displayed on the cathode ray tube 41. Further, a processed composite video signal Sv' obtained from the video signal processing block 26 is supplied to one of input terminals of an adder 53.

In this embodiment, a microphone unit 50 is mounted on a body portion 4 to be relatively close to a lens portion 2. An audio signal Sa obtained from the microphone unit 50 is amplified by an automatic gain control amplifier (AGC amplifier) 51 and then supplied to an audio signal processing block 52. In the audio signal processing block 52, for example, the audio signal Sa amplified by the AGC amplifier 51 is used for frequency-modulating a predetermined carrier so as to generate a frequency-modulated audio signal Saf. This frequency-modulated audio signal Saf is supplied to the other of the input terminals of the adder 53, and a combined signal Sx is obtained at an output terminal of the adder 53, Sx contains the processed composite video signal Sv' and the frequency-modulated audio signal Saf and has, for example, such a frequency-spectrum characteristic as to be suitable for recording by a compact video tape recorder used with a magnetic tape having a width of eight millimeters (8mm VTR).

The combined signal Sx derived from the adder 53 is supplied to a magnetic recording portion 54 which is contained in the body portion 4 and operative to perform magnetic recording of signals in the same manner as the 8mm VTR. In the magnetic recording portion 54, the combined signal Sx supplied from the adder 53 is recorded on a magnetic tape 55 through each of a pair of rotary magnetic heads 56 scanning the magnetic tape 55 alternately to form oblique record tracks arranged successively. In connection with the magnetic recording portion 54, a recording button 57 is provided on the body portion 4 to be operated when the magnetic recording portion 54 is required to work.

Incidentally, the body portion 4 is provided with also a grip member 60 at the bottom thereof.

Although the magnetic recording portion 54 is contained in the body portion 4 in the above mentioned embodiment, the magnetic recording portion 54 can be arranged also to be attached to the body portion 4 to be detachable therefrom.

Further, although in each of the aforementioned embodiments, the pickup output signal Sc is supplied to the memory 28 so that every predetermined segment of the pickup output signal Sc corresponding to two successive field periods is stored in the memory 28 in the manner that each segment is renewed by a succeeding one when the light 0 from the subject having passed through the lens device 6 is incident upon the light receiving surface of the image pickup device 16 when the movable mirror 12 is disposed at the first position and the pickup output signal Sc is obtained from the image pickup device 16, it is to be understood that the invention is not limited thereto, and the video signal Sv may be supplied, instead of the pickup output signal Sc, to the memory 28 so that every predetermined segment of the video signal Sv corresponding to two successive field periods is stored in the memory 28 in the manner that each segment is renewed by a succeeding one. In such a case, in the period Tf wherein the movable mirror 12 is disposed at the second position, the segment of the video signal Sv corresponding to two successive field periods which has been stored in the memory 28 just before the period Tf is read from the memory 28 to be supplied to the video signal generating block 22 and the video signal generating block 22 delivers the video signal Sv read from the memory 28 to the video signal processing blocks 26 or both the video signal processing blocks 26 and 40.

## Claims

1. A composite camera apparatus having lens means (2) upon which light from a subject is incident,

   a film holder (18) for supporting a photosensitive film upon which an image of the subject is formed by the light having passed through said lens means (2);

   an image pickup means (16) provided with a light receiving surface upon which an image of the subject is formed by the light having passed through said lens means (6) for producing a pickup output signal in response to the image formed upon the light receiving surface;

   a movable mirror (12) selectively positionable at a first position for permitting the light having passed through said lens means (2) to be incident upon said light receiving surface of the image pickup means (16) and at a second position for permitting the light having passed through said lens means (2) to be incident upon said photosensitive film; and

   mirror control means (l3) selectively operable by the user of the camera to cause said movable mirror (12) to be positioned at said second position in synchronism with the occurrence of the next vertical blanking period in video signal after the user causes the mirror control means (13) to be operable, characterised by video signal generating means (22) connected to said image pickup means (16) for continuously producing Said video signal based upon the pickup output signal obtained from said image pickup means (16) and by memory means (28) operative to electronically store each successive predetermined segment of the pickup output signal obtained from said image pickup device (16) in such a manner that each successive stored segment replaces the previously stored segment when said movable mirror (12) is positioned at said first position and to permit the last stored segment to be read therefrom when said movable mirror (12) is positioned at said second position.

2. A composite camera apparatus according to claim 1 wherein said predetermined segment of the pickup output signal is two successive fields.

3. A composite camera apparatus according to claim 1 or 2 including video signal processing means (26) connected to said video signal generating means (22) for producing a processed video signal appropriate for magnetic recording based on said video signal; and
magnetic recording means (54) connected to said video signal processing means (26) for recording said processed video signal on a magnetic tape.

4. A composite camera apparatus according to claim 3 further comprising audio signal generating means (50, 51) for producing an audio signal, audio signal processing means (52) for producing a processed audio signal appropriate for magnetic recording based on said audio signal, and adding means (53) for mixing said processed audio signal with said processed video signal so that said processed audio signal is recorded together with said processed video signal.

**Revendications**

1. Appareil composite de prise de vues possédant un système optique (2) sur lequel arrive la lumière venant d'un sujet,
un porte-film (18) servant à porter un film photosensible sur lequel une image du sujet est formée par la lumière qui a traversé ledit système optique (2);
un moyen capteur d'image (16) doté d'une surface de réception de lumière sur laquelle une image du sujet est formée par la lumière ayant traversé ledit système optique (2) afin de produire un signal de sortie de détection en fonction de l'image formée sur la surface de réception de lumière;
un miroir mobile (12) pouvant être sélectivement positionné en une première position, qui permet que la lumière ayant traversé ledit système optique (2) arrive sur ladite surface de réception de lumière dudit moyen capteur d'image (16), et en une deuxième position, qui permet que la lumière ayant traversé ledit système optique (2) arrive sur ledit film photosensible; et

un moyen de commande de miroir (13) pouvant être sélectivement actionné par l'utilisateur de l'appareil de prise de vues afin de faire que ledit miroir mobile (12) soit placé à ladite deuxième position en synchronisme avec l'apparition de la période de suppression verticale du signal vidéo produite juste après que l'utilisateur a activé le moyen de commande de miroir (13), caractérisé par un moyen générateur de signal vidéo (22) connecté audit moyen capteur d'image (16) afin de produire continûment ledit signal vidéo sur la base du signal de sortie de détection obtenu de la part dudit moyen capteur d'image (16), et par un moyen de mémorisation (28) ayant pour fonction de mémoriser électroniquelent chaque segment prédéterminé successif du signal de sortie de détection obtenu de la part dudit dispositif capteur d'image (16), de manière que chaque segment mémorisé successif remplace le segment antérieurement mémorisé lorsque ledit miroir mobile (12) est placé dans ladite première position, et de permettre que le dernier segment mémorisé y soit lu lorsque ledit miroir mobile (12) est placé dans ladite deuxième position.

2. Appareil composite de prise de vues selon la revendication 1, où ledit segment prédéterminé du signal de sortie de détection est constitué de deux trames successives.

3. Appareil composite de prise de vues selon la revendication 1 ou 2, comportant un moyen de traitement de signal vidéo (26) connecté audit moyen générateur de signal vidéo (22) afin de produire, sur la base dudit signal vidéo, un signal vidéo traité qui convient pour l'enregistrement magnétique; et
un moyen d'enregistrement magnétique (54) connecté audit moyen de traitement de signal vidéo (26) afin d'enregistrer ledit signal vidéo traité sur une bande magnétique.

4. Appareil composite de prise de vues selon la revendication 3, comprenant en outre un moyen générateur de signal audio (50, 51) servant à produire un signal audio, un moyen de traitement de signal audio (52) servant à produire, sur la base dudit signal audio, un signal audio traité convenant pour l'enregistrement magnétique, et un moyen d'addition (53) servant à mélanger ledit signal audio traité avec ledit signal vidéo traité de façon que ledit signal audio traité soit enregistré en même temps que ledit signal vidéo traité.

**Ansprüche**

1. Verbundkamera mit

einem Objektiv (2), auf das Licht von einem Aufnahmegegenstand auftrifft,

einem Filmhalter (18) zur Aufnahme eines lichtempfindlichen Films, auf dem das durch das Objektiv (2) gelangende Licht ein Bild des Aufnahmegegenstands erzeugt,

einer Bildabtasteinrichtung (16) mit einer Lichtempfangsfläche, auf der das durch das Objektiv (2) gelangende Licht ein Bild des Aufnahmegegenstands erzeugt, wobei die Bildabtasteinrichtung (16) ein Abtaster-Ausgangssignal liefert, das dem auf der Lichtempfangsfläche erzeugten Bild entspricht,

einem bewegbaren Spiegel (12), der wahlweise in eine erste Position oder in eine zweite Position bewegbar ist, wobei er in der ersten Position bewirkt, daß das durch das Objektiv (2) gelangende Licht auf die Lichtempfangsfläche der Bildabtasteinrichtung (16) auftrifft, während er in der zweiten Position bewirkt, daß das durch das Objektiv (2) gelangende Licht auf den lichtempfindlichen Film auftrifft, und

einer Spiegelsteuervorrichtung (13), die von dem Kamerabenutzer wahlweise so betätigbar ist, daß sie den bewegbaren Spiegel synchron mit der nächsten vertikalen Austastlücke, die in einem Videosignal auftritt, nachdem der Benutzer das Wirksamwerden der Spiegelsteuervorrichtung (13) veranlaßt hat, in die genannte zweite Position führt,

**gekennzeichnet durch**

eine mit der Bildabtasteinrichtung (16) verbundene Video-signal-Generatoreinrichtung (22) zur kontinuierlichen Erzeugung des genannten Videosignals auf der Basis des Abtaster-Ausgangs-signals der Bildabtasteinrichtung (16) und

eine Speichereinrichtung (28), die so betreibbar ist, daß sie

- jedes nachfolgende vorbestimmte Segment des Abtaster-Ausgangssignals der Bildabtasteinrichtung (16) in der Weise elektronisch speichert, daß jedes nachfolgende gespeicherte Segment das zuvor gespeicherte Segment ersetzt, wenn der bewegbare Spiegel (12) sich in seiner ersten Position befindet, und

- das Auslesen des zuletzt gespeicherten Segments zuläßt, wenn der bewegbare Spiegel (12) sich in seiner zweiten Position befindet.

2. Verbundkamera nach Anspruch 1, bei der das vorbestimmte Segment des Abtaster-Ausgangssignals zwei aufeinanderfolgende Halbbilder umfaßt.

3. Verbundkamera nach Anspruch 1 oder 2 mit

einer mit der Videosignal-Generatoreinrichtung (22) verbundenen Videosignal-Verarbeitungseinrichtung (26), die auf der Basis des genannten Videosignals ein Videosignal erzeugt, das eine zur magnetischen Aufzeichnung geeignete Form besitzt, und

einer mit der Videosignal-Verarbeitungseinrichtung (26) verbundenen magnetischen Aufzeichnungseinrichtung (54) zum Aufzeichnen des behandelten Videosignals auf einem Magnetband.

4. Verbundkamera nach Anspruch 3 mit einer AudiosignalGeneratoreinrichtung (50, 51) zur Lieferung eines Audiosignals, einer Audiosignal-Verarbeitungseinrichtung (52), die auf der Basis des genannten Audiosignals ein Audiosignal erzeugt, das eine zur magnetischen Aufzeichnung geeignete Form besitzt, und einer Addiereinrichtung (53) zum Mischen des behandelten Audio-signals mit dem behandelten Videosignal in der Weise, daß das behandelte Audiosignal zusammen mit dem behandelten Videosignal aufgezeichnet wird.

FIG. 1

EP 0 233 736 B1

FIG. 2A

Ss

FIG. 2B

Sm

FIG. 2C

Sc

0

FIG. 2D

Sc'

0

FIG. 2E

Sv

0

$T_B$  $t_1$  $t_2$  $T_B$  $T_B$  $t_3$  $T_B$

$T_f$

FIG. 3